# EUROPÄISCHE PATENTSCHRIFT

(11) **EP 0 748 734 B1**
(45) Veröffentlichungstag und Bekanntmachung des Hinweises auf die Patenterteilung: **10.03.1999**
(21) Anmeldenummer: 96106872.3
(22) Anmeldetag: 02.05.1996
(51) Int. Cl.: B62D 1/19, B62D 25/14, B60R 21/00

(54) **Lenksäule für Kraftfahrzeuge**
Safety steering column
Colonne de direction de sécurité

(30) Priorität: 15.06.1995 DE 19521793
(43) Veröffentlichungstag der Anmeldung: 18.12.1996
(73) Patentinhaber: DAIMLER-BENZ AKTIENGESELLSCHAFT, 70567 Stuttgart (DE)
(72) Erfinder: Witkovsky, Thomas, 71120 Grafenau (DE); Schnabel, Alfred, 75382 Althengstett (DE); Zimmermann, Rolf, 71139 Ehningen (DE)

(56) Entgegenhaltungen:
- DE-A- 3 004 797
- DE-C- 3 427 211

## Beschreibung

Die Erfindung betrifft eine Lenksäule für Kraftfahrzeuge gemäß dem Oberbegriff des Anspruchs 1.

Aus der DE 30 04 797 A1, die im Oberbegriff des Anspruchs 1 berücksichtigt ist, ist eine Lenksäule für Kraftfahrzeuge bekannt, welche zwei zueinander rechtwinklig verlaufende Streben zur Stütze des Mantelrohrs an Fahrzeugtragteilen aufweist. Eine dieser Streben ist in Fahrzeugquerrichtung zur Fahrzeugseite gerichtet und gibt bei einer hohen Crashbelastung biegeweich nach. Diese in Fahrzeugquerrichtung verlaufende Strebe kann bei der Verformung des Fahrzeugs im Crash als Hindernis die Verschiebung der Pedale hemmen, wodurch diese dann über die Strebe verschwenkend auf das Mantelrohr einwirken, und die Lage des Lenkrads in eine für den Insassen ungünstige Position überführen können.

Die DE 34 27 211 C1 beschreibt eine Sicherheitslenksäule für Kraftfahrzeuge, die eine die Lenksäule mit dem Karosserieaufbau verbindende Strebe umfaßt. Diese Strebe weist zwei parallelverlaufende und zusammenwirkende Verbindungsglieder auf, wovon eines bei Crashbelastung aufgesprengt wird und hiernach eine Verbiegung des anderen Verbindungsgliedes zuläßt. Eine vollständige Auftrennung in mindestens zwei Strebenteile findet hier nicht statt.

In der DE 32 45 741 C2 ist eine Lenksäule beschrieben, deren Mantelrohr mit einer in Fahrzeuglängsrichtung verlaufenden Strebe an einem crashfesten Fahrzeugteil abgestützt ist. Die Strebe wird bei einem Crash mit starker Vorbaudeformation durch einen Querträger verformt und führt dann zu einem flacher gestellten Mantelrohr und dadurch abgesenktem Lenkrad. Eine im Fahrzeug querverlaufende Strebe kann aber eher, trotz der möglichen Verbiegung, die Verschiebung eines Innenraumteils (Aggregates) behindern, welches dann über die Strebe auf das Mantelrohr einwirkt, und dieses in eine ungewollte Lage verschiebt.

Die Aufgabe der Erfindung besteht darin, bei einer gattungsgemäßen Lenksäule im Crashfall eine ungünstige Bewegung des Mantelrohrs zu verhindern.

Die Aufgabe wird durch die kennzeichnenden Merkmale des Patentanspruchs 1 gelöst.

Durch eine oder mehrere Strebe(n) wird das Mantelrohr im üblichen Fahrbetrieb abgestützt. Für den Crashfall, bei dem eine querverlaufende Strebe beaufschlagt wird, ist eine gezielte Auftrennung dieser Strebe vorgesehen, damit durch die Einwirkung auf die Strebe keine Verschiebung des Mantelrohrs in eine für den Fahrzeuginsassen ungünstige Lage verursacht werden kann.

Die Trennstelle an der Strebe wird in ihrem Widerstand gegen eine Auftrennung an die durch Crashversuche ermittelte, erwünschte bzw. notwendige Belastungsgrenze angepaßt, so daß sie ihre abstützende Wirkung bis zu einem Grenzwert aufrecht erhalten kann.

Dabei kann die Trennstelle für eine örtliche Belastung durch ein während des Crash dagegenverschobenes Innenraumteil bzw. Aggregat vorbereitet sein, oder sich bei ihrer Verbiegung durch axial oder radial einwirkende Kräfte ab einer bestimmten Belastung oder Verwinkelung auch selbsttätig auftrennen.

Eine Schwächung des aufzutrennenden Strebenbereichs kann an einer einstückigen Strebe vorgenommen oder durch ein der Strebe an- oder in diese eingefügtes Zwischenstück erreicht werden.

Hierbei ist für die Trennstelle ein zur restlichen Strebe unterschiedliches Materialgefüge oder auch eine Sollbruchstelle im Material, z.B. mit Kerben oder Einstichen möglich. Weiterhin könnte die Strebe an dieser Stelle eine bei dieser Belastung brechende, konstruktive Form aufweisen.

Eine weitere Ausbildung sieht ein zusätzliches Strebenstück vor, an dem dieselben Schwächungsmöglichkeiten gegenüber den anschließenden Strebenteilen vorgesehen sein können. Auch der Verbindungsabschnitt zur Strebe kann die Trennstelle bilden. So kann das zusätzliche Strebenstück überlappend an der Strebe, z.B. in eine Strebenaufnahme eingreifend, gehalten werden, wobei diese Überlappung durch das Verbiegen der Strebe aufgehoben wird. Weiterhin kann das zusätzliche Strebenstück auch angeklebt werden, wobei die Verklebung zusätzlich als korrosionsverhindernde Isolation zwischen den unterschiedlichen Strebenmaterialien wirkt.

Eine derartige Strebe ist dann besonders hilfreich, wenn die Strebe, die aufgrund ihrer Funktion in Fahrzeugquerrichtung verläuft, und die den Verschiebeweg der beim Crash in Fahrzeugrichtung verschobenen dortigen Innenraumteile bzw. Aggregate blockiert, durch diesen Trennvorgang den Verschiebeweg freigeben kann.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1:: in einer Ansicht einen Abschnitt einer Lenksäule, mit einer querverlaufenden Strebe vom Mantelrohr zu einer Fahrzeugsäule, und
- Fig. 2:: ein Ausbildungsbeispiel einer Strebe.

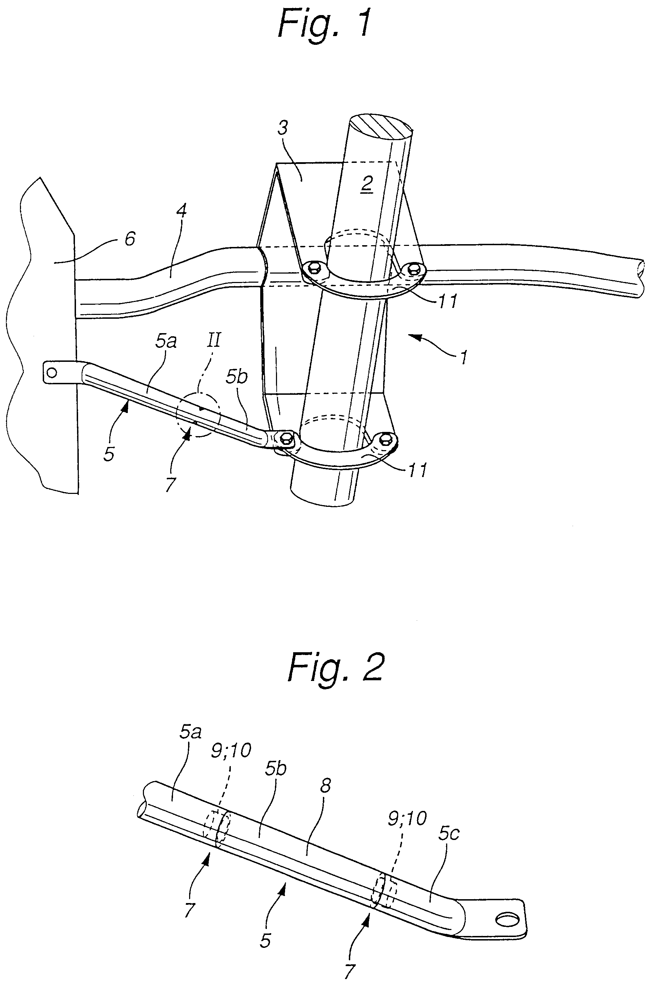

In Fig. 1 ist in Ansicht ein Abschnitt einer Lenksäule 1 dargestellt, in dem ein Mantelrohr 2 in einer Blechkonsole 3 gelagert ist, welche an einem Fahrzeugquerträger 4 festgelegt ist. Das Mantelrohr 2 wird mit Schellen 11 fest mit der Blechkonsole 3 verschraubt.

Das Mantelrohr 2 ist zusätzlich mittels einer in Fahrzeugquerrichtung verlaufenden Strebe 5, die an der Blechkonsole 3 befestigt ist, an einer seitlichen Fahrzeugsäule 6 abgestützt. Hiermit können störende Schwingbewegungen des Mantelrohrs 2 unterbunden werden.

Da die Strebe 5 quer am Rande des Fußraums im Fahrzeug verläuft, tritt bei einem Crash das Problem auf, daß die Pedalanordnung bei der Komprimierung des Vorbaus zwar am Mantelrohr 2 vorbeigeschoben, aber gegen diese Strebe 5 gedrückt wird. Damit die Strebe 5 dann das Mantelrohr 2 nicht mit sich zieht und in ungünstiger Weise für den Fahrzeuginsassen verschwenkt, ist an der Strebe 5 eine Trennstelle 7 ausgebildet, in der die Strebe 5 bei der entsprechend hohen Belastung in einem Crash in mehrere Strebenteile 5a und 5b teilbar ist.

Die Trennstelle 7 ist in Fig. 1 nur skizziert dargestellt. Es kann sich hierbei um eine Schwachstelle in der Strebe 5 handeln, die z.B. ein Materialgefüge aufweist, das durch die Bearbeitung mit einem metallurgischen Verfahren eine höhere Sprödigkeit als die restliche Strebe aufweist.

Weiterhin kann an dieser auftrennbaren Stelle 7 im Material eine Sollbruchstelle in Form von Kerben oder Einstichen ausgebildet sein sowie eine einfacher durchzubrechende, konstruktive Formgebung vorgesehen werden.

Dieselben Merkmale kann auch ein zusätzliches Strebenstück 8 aufweisen, wie es Fig. 2 zeigt, welches in die Strebe 5 eingesetzt oder an einem Ende angesetzt werden kann. Dieses Strebenstück 8 bildet die Trennstelle 7, indem es mit seinen beiden im Durchmesser verringerten Enden 9 in jeweilige Aufnahmen 10 der Strebe 5 eingesetzt liegt und bei der Verbiegung der Strebe 5 aus dieser herausgezogen wird, wodurch dann drei getrennte Strebenteile 5a, 5b, 5c vorhanden sind. In einer Ausführung kann das Strebenstück 8 auch an die Strebe 5 angeklebt sein, wobei die Klebstoffschicht dann eine korrosionsverhindernde Trennstelle zwischen dem Strebenmaterial und einem dazu unterschiedlichen Strebenstückmaterial bildet. Für diese Ausführung bietet sich zur einfachen Herstellung ein rohrförmiger Strebenquerschnitt an.

In diesen Ausführungsbeispielen wird die Strebe 5 bei entsprechender Verbiegung durch die Crashbelastung in die Strebenteile 5a, 5b, 5c aufgetrennt und gibt dann den Weg für eine Verschiebung eines Innenraumteils oder eines Aggregates frei.

## Patentansprüche

1. Lenksäule für Kraftfahrzeuge, mit Streben zur Stütze des Mantelrohrs an Fahrzeugtragteilen, wovon mindestens eine Strebe in Fahrzeugquerrichtung verläuft,
**dadurch gekennzeichnet,**
daß an einer querverlaufenden Strebe (5) mindestens eine Trennstelle (7) ausgebildet ist, durch die die Strebe (5) bei Crashbelastung in voneinander getrennte Strebenteile (5a, 5b, 5c) teilbar ist.

2. Lenksäule für Kraftwagen nach Anspruch 1,
**dadurch gekennzeichnet,**
daß sich die Strebe (5) beim Erreichen einer vorbestimmten Belastung selbsttätig auftrennt.

3. Lenksäule für Kraftwagen nach Anspruch 1,
**dadurch gekennzeichnet,**
daß an der Strebe (5) an einer Trennstelle (7) ein weiteres Strebenstück (8) ein- bzw. angesetzt ist.

4. Lenksäule für Kraftwagen nach Anspruch 3,
**dadurch gekennzeichnet,**
daß das Strebenstück (8) mit der Strebe (5) verklebt ist.

5. Lenksäule für Kraftwagen nach Anspruch 3,
**dadurch gekennzeichnet,**
daß mindestens ein Ende des Strebenstücks (8) überlappend in eine Aufnahme (10) an der Strebe (5) lösbar eingesetzt ist.

6. Lenksäule für Kraftwagen nach Anspruch 1,
**dadurch gekennzeichnet,**
daß die Strebe (5) als Rohr ausgebildet ist.

7. Lenksäule für Kraftwagen nach Anspruch 1,
**dadurch gekennzeichnet,**
daß die Trennstelle (7) ein gegenüber den angrenzenden Bereichen unterschiedliches Materialgefüge aufweist.

8. Lenksäule für Kraftwagen nach Anspruch 1,
**dadurch gekennzeichnet,**
daß die Trennstelle (7) aus einer konstruktiv ausgebildeten Sollbruchstelle besteht.

9. Lenksäule für Kraftwagen nach Anspruch 1,
**dadurch gekennzeichnet,**
daß bei zwei in Fahrzeugquerrichtung gegenläufigen Streben (5) jede Strebe (5) für sich teilbar ist.

## Claims

1. A steering column for motor vehicles having struts to support the steering column tube against supporting members of the vehicle, at least one of these struts extending in the cross-direction of the vehicle,
**characterised in that**
one transversely extending strut (5) is designed to have at least one breaking point (7), by means of which the strut (5) can be broken into separate strut parts (5a, 5b, 5c) in the event of impact load.

2. A steering column for motor vehicles as claimed in claim 1
**characterised in that**
the strut (5) separates when a predetermined load is reached.

3. A steering column for motor vehicles as claimed in claim 1,
**characterised in that**
an additional strut-piece (8) is inserted on or attached to the strut (5) at a breaking point (7).

4. A steering column for motor vehicles as claimed in claim 3,
**characterised in that**
the strut-piece (8) is bonded to the strut (5).

5. A steering column for motor vehicles as claimed in claim 3,
**characterised in that**
at least one end of the strut-piece (8) is releasably inserted in a mounting (10) overlapping the strut (5).

6. A steering column for motor vehicles as claimed in claim 1,
**characterised in that**
the strut (5) is of a tube design.

7. A steering column for motor vehicles as claimed in claim 1,
**characterised in that**
the breaking point (7) is of a different material structure than the adjoining regions.

8. A steering column for motor vehicles as claimed in claim 1,
**characterised in that**
the breaking point (7) consists of a structurally designed breaking point.

9. A steering column for motor vehicles as claimed in claim 1,
**characterised in that**
if there are two opposing struts (5) in the cross-direction of the vehicle, each strut (5) is individually separable.

## Revendications

1. Colonne de direction pour véhicules automobiles, avec des entretoises pour l'appui du tube enveloppe en des parties porteuses du véhicule, dont au moins une entretoise s'étend dans la direction transversale du véhicule, caractérisée en ce que, sur une entretoise (5) s'étendant transversalement, est réalisé au moins un point de séparation (7) au moyen duquel l'entretoise (5) est divisable en des parties d'entretoise (5a, 5b, 5c) séparées les unes des autres, en cas de sollicitation imputable à une collision.

2. Colonne de direction pour des véhicules automobiles selon la revendication 1, caractérisée en ce que l'entretoise (5) se subdivise automatiquement lors de l'atteinte d'une sollicitation prédéterminée.

3. Colonne de direction pour des véhicules automobiles selon la revendication 1, caractérisée en ce qu'une autre pièce d'entretoise (8) est insérée ou appliquée sur l'entretoise (5), en un emplacement de séparation (7).

4. Colonne de direction pour des véhicules automobiles selon la revendication 3, caractérisée en ce que la pièce d'entretoise (8) est collée à l'entretoise (5).

5. Colonne de direction pour des véhicules automobiles selon la revendication 3, caractérisée en ce qu'au moins une extrémité d'une pièce d'entretoise (8) est insérée de façon désolidarisable sur l'entretoise (5), avec chevauchement dans un logement (10).

6. Colonne de direction pour véhicules automobiles selon la revendication 1, caractérisée en ce que l'entretoise (5) est réalisée sous la forme d'un tube.

7. Colonne de direction pour véhicules automobiles selon la revendication 1, caractérisée en ce que l'emplacement de séparation (7) présente une structure de matériau différente de celle des zones limitrophes.

8. Colonne de direction pour véhicules automobiles selon la revendication 1, caractérisée en ce que le point de séparation (7) est constitué d'un point destiné à la rupture, réalisé au stade de la construction.

9. Colonne de direction pour véhicules automobiles selon la revendication 1, caractérisée en ce que, dans le cas où il y a deux entretoises (5) placées en sens inverse dans la direction transversale du véhicule, chaque entretoise (5) est divisable pour soi.
